Europäisches Patentamt

European Patent Office

Office européen des brevets

(19)

(11) Publication number: **0 065 798**

**A1**

(12) **EUROPEAN PATENT APPLICATION**

(21) Application number: **82200545.0**

(22) Date of filing: **06.05.82**

(51) Int. Cl.³: **G 01 F 23/28**

(30) Priority: **13.05.81 NL 8102343**

(43) Date of publication of application:
**01.12.82 Bulletin 82/48**

(84) .Designated Contracting States:
**AT BE CH DE FR GB IT LI LU NL SE**

(71) Applicant: **Smeets, Andreas Leonie Maria Theodoor, Ir.
Orleanshof 11
NL-5627 LM Eindhoven(NL)**

(72) Inventor: **Smeets, Andreas Leonie Maria Theodoor, Ir.
Orleanshof 11
NL-5627 LM Eindhoven(NL)**

(74) Representative: **Noz, Franciscus Xaverius, Ir. et al,
Boschdijk 155 P.O. Box 645
NL-5600 AP Eindhoven(NL)**

(54) **Device for determining and displaying respectively the degree of filling and/or the kind of filler in a liquid gas tank, particularly an LPG tank in cars.**

(57) The invention relates to a fuel tank particularly for use in motor-cars comprising a device for assessing the degree of filling of the tank with liquid fuel said device comprising a rod of a material conducting radiation energy arranged at an imaginary level of liquid fuel in a given position of the tank, one end of said rod being accessible to radiation energy externally of the tank and at least part of said rod, in dependence upon the actual level of the liquid fuel, directing back to said one end along said part a portion of the radiation energy directed to said one end, whereby the fuel tank is a tank for liquid gas, particularly liquid petroleum gas for cars.

FIG.2.

-1-

Device for determining and displaying respectively the degree of fil-
ling and/or the kind of filler in a liquid gas tank, particularly a
LPG tank in cars.

The invention relates to a fuel tank particularly for use in motor-
cars comprising a device for determining the degree of filling with liquid
fuel, said device comprising a rod made of radiation energy conducting material, located at the imaginary level of the liquid fuel in the tank in a given
position thereof, one end of said rod being accessible to radiation energy
externally of the tank and at least part of said rod feeding along it back
to said one end part of the radiation energy directed to said one end of the
rod in dependence on the actual level of the liquid fuel.

A device of the kind set forth is known from German patent specifi-
cation 883,068.

In the Netherlands, with respect to LPG tanks it is a provision
that such tanks should be filled with LPG at the most up to 80 % and abroad
similar provisions apply. At present a mechanical structure is used in such
gas tanks, in which when the level of 80 % is reached the visible, liquid
gas rather than the invisible, gaseous fuel escapes through the needle
valve than can be closed. This is, indeed, a very curious solution, since on the one hand for reasons of safety a solution is given for the problem of filling the tank for not more than 80 % and on the other hand a real hazard is brought about by the explosive, escaping gas so that a new problem comes up. There is furthernore known a float-valve mechanism, but it has been found in practice to be unreliable.

It has furthermore been found that even the use of modern electronics does not provide practically useful devices satisfying the severe requirements.

The invention has for its ojbect to obviate said disadvantages and to provide several possibilities of detection and therefore, provides a device of the kind set forth in the preamble, which is characterized in that the fuel tank is a tank for liquid gas, particularly liquid petroleum gas for cars.

By using radiation energy conducting, for example, optical means in a liquid gas tank and opto-electronic means outside thereof, co-operating with the former means the invention permits of satisfying the severe requirements and it provides not only a device indicating the attainment of the filling degree of 80 %, but also a device for assessing at least substantially continuously the extent of filling of the tank with liquid gas. It should be noted here that the invention is not necessarily limited to LPG tanks, because it may also be applied to other reservoirs for liquid gases.

Referring now to the application of the invention to LPG tanks, it is noted that, as may be known, in various countries the liquid petroleum gas has different compositions, for example, mainly propane, mainly butane or a mixture of said gases. In many cases it is desirable to re-trim the setting of a LPG system with regard to the kind of gas. The electrical signal resulting from the measurement may, subsequent to being processed, be used to reset, as the case may be, automatically the setting member controlling the ratio of the mixture.

A preferred embodiment of said device in accordance with the invention to be employed for said specific purpose is furthermore characterized in that the device furthermore comprises two members arranged in the tank and guiding the radiation energy along given paths and being accessible at one end to radiation energy, externally of the tank, the other ends of said members defining, above the predetermined liquid gas level, a transfer path for radiation energy between said members and in that a float member is arranged in the liquid gas in the tank to co-operate with the radiation energy transfer path in the liquid gas in the tank in a manner such that, when the liquid gas in dependence on the specific mass of the liquid gas in the tank, attains its actual level, a detectable larger or smaller portion of the beam of radiation energy directed in one of the members is directed out of the other member so that, when the maximum degree of filling is detected, the device simultaneously provides an indication of the nature of the liquid gas in the tank.

By using the last-mentioned device it is possible, when the degree of filling of 80 % is detected, to detect at the same time the kind of composition of the liquid gas in the tank.

There may be provided an additional opto-electronic device which receives both the optical signal from the rod for measuring the degree of filling and the optical signal characteristic of the nature of the contents. After it is electronically assessed that the tank is filled up to 80 %, a release signal may be applied to a logic circuit which subsequently interpretes the optical signal from the members for detecting the nature of the gas and there may furthermore be provided members for resetting a valve or a control-member.

It is finally noted that the device according to the invention for assessing the nature of the gas filling operates on the specific mass of the filling, in which at a predetermined level a float member emerges from the level to a greater or lesser extent and, for example, intercepts a light beam to a greater or lesser extent.

The invention will now be described in further detail with reference to a few embodiments, to which the invention, is, however, not limited. Reference is made to the application of the invention to a liquid petroleum gas tank and to the drawing, in which

Fig. 1 shows one embodiment of the device in accordance with the invention for assessing the degree of liquid gas filling of a tank and

Fig. 2 shows a device embodying the invention for assessing a given degree of filling of liquid gas and the nature of the liquid gas in a liquid gas tank.

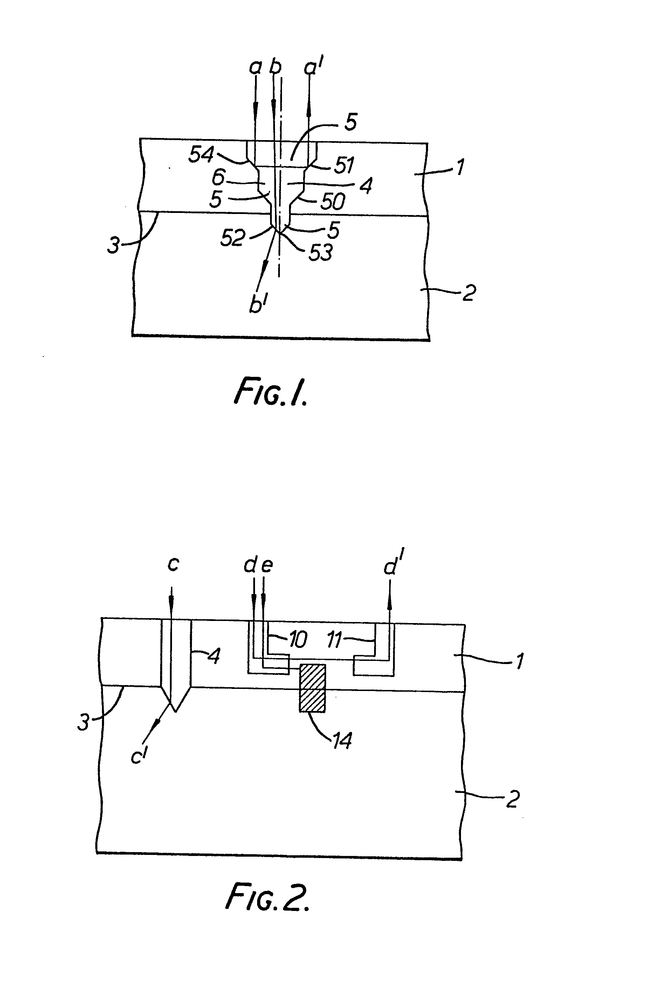

Referring to Fig. 1, reference numeral 1 designates that part of the liquid gas tank in which is arranged a rod 4 of material conducting radiation energy, for example, visible light or infrared radiation. Reference numeral 2 designates the liquid gas, the level of which is indicated by reference numeral 3. Said level can be kept constant by partitions inside the tank for LPG. The rod 4 is shown in a longitudinal sectional view; it may have any cross-section. Reference numeral 5 designates radiation energy feedback parts having, in the embodiment shown, tapering sides 50, 51 and 54 and a tapering side 53 terminating in a tip.

Reference character a designates schematically a ray or beam, for example, visible light uirected in a part of the rod accessible to radiation energy from the outside of the tank. The tapering sides are at an angle of 45 $^{o}$ to the longitudinal axis. At the tapering side 54 the light ray a is reflected parallel to the liquid gas level towards the tapering side 51 and from there the ray a is directed out of the end concerned of the rod, which is indicated by reference symbol a'. This path of the radiation a- a' is characteristic of the fact that the tapering part 5 with the tapering sides 51, 54 is not surrounded by a liquid medium.

The tapering part 5 terminating in a tip 53 is in this case surrounded by liquid gas, which will be apparent from the radiation path b-b'. The ray b directed into the end of the rod accessible to light from the outside does not reflect at the tapering side 52, but in dependence upon the difference in refraction indices of the material of the rod and of the liquid gas in the tank it will be deflected to form the ray b'.

It will, therefore, be easily understood that a portion of the radiation energy beam directed into the end of the rod accessible from the outside of the tank will be fed back from the same end in dependence upon the liquid gas level 3 in the tank 2. If the liquid gas level lies below the tip 53 of the rod, the whole radiation energy beam will, theoretically, be reflected, whereas when the liquid gas level 3 is above the highest, tapering part 5 with the tapering sides 51, 54, very little of the radiation energy beam directed into the rod will, theoretically be reflected.

Preferably the diameter of the radiation energy beam is smaller than half the diameter of the end of the rod accessible to the radiation energy beam, if for example the rod is imagined to have a circular or elliptical cross-section and the beam to be neither converging nor diverging in order to avoid interference between the beams passing into and out of the rod.

The device shown in Fig. 1 thus provides an optical or, more broadly, a radiation-energy-sensitive detection of the liquid gas level 3 in the tank 2. The radiation energy may be supplied from a source having a radiation energy beam output of constant intensity. The radiation energy beam emanating from the rod can be detected and related to the beam directed into the rod and the ratio between the respective intensities is a measure of the degree of liquid gas filling. When, for example, visible light is used, said ratio can be optically determined and it can subsequently be converted into an electric signal. The comparison may, as an alternative be electronically carried out subsequent to opto-electronic conversion of at least the beam emanating from the rod. For the indicating of the filling degree a great variety of components is available, for example, rod-shaped, . light-emitting diodes, a row of punctiform light-emitting diodes and other digital and analogue display elements.

The rod 4 of Fig. 1 has alternately tapering parts 5 and 6 respectively, not varying in corss-section. The greater the number of said alternating parts, the narrower may be the rod and hence also the radiation . energy beam directed into the rod. This involves, of course, that the detection and any opto-electronic conversion should be more accurate, but . in the present state of electronics this does not bring about any problem.

In its simplest form the rod 4 may be a narrow rod having a single tapering part terminating in a tip and having a circular cross-section. The rod may then have a small sectional area and the length of the tip may be related thereto and constitute a comparatively very small portion of the rod and also the diameter of the radiation energy beam may be small, for example, it may be a beam from a laser diode, which may be in the infrared range. The tip of the rod is arranged at, for example, the maximum level of the liquid gas filling of the tank to be detected. As long as the liquid level has not reached the tip and hence the maximum level of the filling, the laser beam will emerge, substantially unattenuated from the rod, whereas, when the liquid level completely flows around the tip, the laser beam, apart from some stray light, will not at all emerge from the rod, since it will be deflected in the liquid gas.

This situation is illustrated in Fig. 2 at reference numeral 4 and by the radiation path c-c'. In fig. 2 corresponding or similar parts are designated by the same reference numerals. Fig. 2 shows an embodiment of a device according to the invention by which both the attainment of the maximum degree of liquid gas filling of the tank and the nature of the liquid gas filling the tank to the maximum level can be assessed.

When, as indicated in Fig. 2, the liquid gas level is such that the tip of the rod is completely immersed in the liquid gas, the radiation energy beam directed into the rod will not be detected. This situation is concerned with a bivalent state which may be represented by a binary logic digit, that is to say, the laser beam is re-detected, i.e. state "1" and the laser beam is not re-detected i.e. state "0". This information may be output of a logic member.

In the device of Fig. 2, at the side of the rod 4 in the tank, two further members guiding radiation energy in a given path, in this case, an L-shaped path are arranged above the liquid gas level that may be reached as a maximum.Said members 10 and 11 have the shape of an L. The short limbs or the L-shaped members or rods are arranged so that between them a radiation energy transfer path is defined. If. for example, a laser beam $d$ is directed into the member 10, it will be directed by optical agency between the two members to the rod 11 and emerge therefrom, which is indicated by d'. Fig. 2 furthermore shows a float member 14, which is arranged in the tank in a manner such that it can be moved by the liquid gas into the optical path between the members 10 and 11.

Liquid petroleum gas may be of different compositions. In practice it may contain either butane or propane or it may be a mixture thereof. It is known that the specific masses of said gases are highly different and in accordance herewith the float member 14 will emerge out of the liquid to a greater or lesser extent. Butane has a higher specific mass than propane and when the gas filling consists of butane the float member will project further above the liquid gas level than in the case of propane. The material of the float member and the position of the rods 10 and 11 in the tank are chosen so that with propane alone the maximum level of the tank does just not reach the optical path between the rods 10 and 11. If the liquid gas is a mixture of propane and butane, it can be filled to a given height in the optical path in dependence on the ratio between said two gases, whereas with butane alone the optical path is preferably wholly or substantially wholly cut off.

If it is only required or desirable to know whether the tank contains either butane or propane, again a bivalent state may be chosen to be represented by a binary digit. If it is also necessary to know various ratios between butane and propane, this is not possible. By the beam $e$ it is indicated in Fig. 2 that this beam is intercepted by the float member, whereas beam $d$ changes between the rods 10 and 11 along the optical path into beam d', which can be detected at rod 11. The ratio between the input beam or ray and the output beam or ray is again a measure for the liquid gas.

The logic member associated with rod 4 can thus provide an energizing signal, which if it is "1", can actuate the, for example, optoelectronic interpretation means associated with the rods 10 and 11 in order to assess and display the nature of the filling, for example, by indicating the percentage of propane and the percentage of butane in an analogous or digital form which is performed by commercially available analogous and digital opto-electronic or liquid crystal components.

In the following Claims the term "liquid gas" is to be understood to mean also "liquid gas mixture".

The figures used in the Claims are only meant to explain more clearly the intention of the invention and are not supposed to be any restriction concerning the interpretation of the invention.

-1-

CLAIMS

1.    A fuel tank particularly for use in motorcars comprising a device for assessing the degree of filling of the tank with liquid fuel said device comprising a rod of a material conducting radiation energy arranged at an imaginary level of liquid fuel in a given position of the tank, one end of said rod being accessible to radiation energy externally of the tank and at least part of said rod, in dependence upon the actual level of the liquid fuel, directing back to said one end along said part a portion of the radiation energy directed to said one end, characterized in that the fuel tank is a tank for liquid gas, particularly liquid petroleum gas for cars.

2.    A tank as claimed in Claim 1 characterized in that the device assessing the degree of filling with liquid gas in the tank furthermore comprises a radiation energy emitting member and a radiation energy detecting member, said members being arranged so as to co-operate with said one end of the rod and an interpretation member in order to provide an indication of the degree of filling in dependence upon the ratio between emitted energy and detected energy of radiation.

3. A tank as claimed in Claim 2 characterized in that the radiation energy emitting member and the radiation energy detecting member are opto-electronic members.

4. A tank as claimed in Claim 3 characterized in that the opto-electronic members are members sensitive to invisible light.

5. A tank as claimed in anyone of Claims 2 to 4 characterized in that the radiation energy emitting member is designed so that it produces a parallel radiation energy beam, the diameter of which is smaller than half the diameter of the end of the rod accessible to the radiation energy beam.

6. A tank as claimed in anyone of Claims 2 to 5 characterized in that the interpretation member is provided with an indicating member to display the degree of filling in an analogous or digital manner.

7. A tank as claimed in Claim 6 characterized in that the indicating member is arranged on the instrument board of the motor car comprising the tank.

8. A tank as claimed in anyone of the preceding Claims, in which a backwardly directing part of the rod is arranged at a given liquid gas level in the tank, said level being characteristic of a maximum permissible degree of filling, characterized in that the device furthermore comprises two members arranged in the tank and conducting radiation energy in a given path, said members being accessible at one end to radiation energy externally of the tank, the other ends of said members defining a radiation energy transfer path between said members above the predetermined liquid gas level and a float member arranged in the tank is adapted to co-operate with the radiation energy transfer path and the liquid gas in the tank so that, when the actual liquid gas level is reached, in dependence upon the specific mass of the liquid gas in the tank, a detectable larger or smaller portion of a radiation energy beam directed into one of the members is directed out of the other member so that at the detection of the maximum degree of filling the device simultaneously provides an indication of the nature of the liquid gas in the tank.

9. A liquid gas tank comprising a device for assessing the nature of the liquid gas in said tank characterized in that the device comprises two members arranged in the tank and conducting radiation energy in a given path, said members being accessible at one end externally to radiation energy, the other ends of said members defining a radiation energy transfer path between the members above a predetermined maximum liquid gas level thought to occur in a given position of the tank and a float member which is arranged in the tank so as to co-operate with the radiation energy transfer path and the liquid gas in the tank in a manner such that, when the actual liquid gas level attains the imaginary liquid gas level dependent on the specific mass of the liquid gas in the tank, a detectable, larger or smaller portion of a radiation energy beam directed into one of the members is directed out of the other member.

10. A tank as claimed in Claim 8 or 9 characterized in that the members guiding the radiation energy in a given path are L-shaped rods, one limb of which is arranged at right angles to the imaginary liquid gas level in a given position of the tank.

11. A rod, a member guiding radiation energy in a given path or device for assessing the degree of filling and/or the nature of the filling, apparently intended for use in a tank as claimed in anyone of the preceding Claims.

Fig.I.

Fig.2.

# 0065798

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-C- 883 068 (OLDHAM & SON LTD.) <br> * Page 1, claims 1-6; figures 10,11 * | 1,2,8-11 | G 01 F 23/28 |
| A | INDUSTRIE DES PLASTIQUES MODERNES, vol. 2, no. 5, 1950, pages 8,9, <br> J. LUSINGCHI: "Bouchons indicateurs de niveau" * Figure 2; page 9, paragraph 3 * | 1,2,8-11 | |
| A | GB-A- 709 371 (OLDHAM & SON LTD.) <br> * Claims 1,2; figure 2 * | 1,2,8-11 | |
| A | GB-A-1 172 066 (ILLINOIS TOOL WORKS INC.) <br> * Claims 1-4 * | 1,2,8-11 | |
| A | US-A-4 119 860 (C. GOOLEY) <br> * Claims 1,8,15,19-23; figure 2 * | 3,6 | TECHNICAL FIELDS SEARCHED (Int. Cl. ³) <br><br> G 01 F |
| A | US-A-3 454 759 (F. CALHOUN) <br> * Claim 1 * | 3,4 | |

The present search report has been drawn up for all claims

| Place of search | Date of completion of the search | Examiner |
|---|---|---|
| THE HAGUE | 27-08-1982 | VITZTHUM N.A. |